# EUROPÄISCHE PATENTANMELDUNG

(11) **EP 1 285 955 A1**
(43) Veröffentlichungstag der Anmeldung: **26.02.2003**
(21) Anmeldenummer: 02016990.0
(22) Anmeldetag: 05.08.2002
(51) Int. Cl.: C09J 9/02, C09J 7/02, C08K 3/08, C08K 9/02, B03C 3/34, C09J 11/04

(54) **Elektrisch leitfähiges, permanent vollflächig haftklebriges, vorzugsweise trägerloses Klebeband bestehend aus einer vorzugsweise auf ein antiadhesives Medium beschichteten Schicht eines Haftklebstoffs mit alkalisch reagierender Haftklebeoberfläche**

(30) Priorität: 23.08.2001 DE 10141380; 20.12.2001 DE 10162613
(71) Anmelder: Tesa AG, 20253 Hamburg (DE)
(72) Erfinder: Schümann, Uwe, Dr., 25421 Pinneberg (DE); Weiland, Kirstin, 21035 Hamburg (DE); Kehler, Harald, Dr., 21109 Hamburg (DE)

(57) **Zusammenfassung**

Permanent vollflächig haftklebriges, vorzugsweise trägerloses Klebeband bestehend aus einer vorzugsweise auf ein antiadhäsives Medium beschichteten Schicht eines Haftklebstoffs, wobei dieser Haftklebstoff enthält
- einen alkalisch reagierenden, festen, pulverisierten, mineralischen Füllstoff mit einem Gewichtsanteil zwischen 5 Gew.-% und 60 Gew.-%, bezogen auf das Gesamtgewicht des Haftklebstoffs, so daß die permanent haftklebrige Oberfläche des Klebebands einen pH-Wert von größer 8 aufweist, und
- einen leitfähigen Zusatz, insbesondere ein Metallpulver, ein mit einem Metall beschichtetes Pulver und/oder metallisierte Kügelchen, mit einem Gewichtsanteil zwischen 5 Gew.-% und 60 Gew.-%, so daß das Klebeband in z-Richtung, das heißt in Richtung der Dicke des Klebebands, elektrisch leitfähig ist.

## Beschreibung

Die Erfindung betrifft ein auf der gesamten Oberfläche permanent haftklebriges, vorzugsweise trägerloses Klebeband bestehend aus einer vorzugsweise auf ein antiadhäsives Medium beschichteten Schicht eines Haftklebstoffs.

Elektrofilter haben in Klimaanlagen gegenüber herkömmlichen, mechanischen Filtern (Stoffen, Papieren etc.) den Vorteil, daß sie einen wesentlich geringeren Druckverlust, geringere Energiekosten und eine geringere Geräuschentwicklung haben. Dennoch bieten auch sie wie die herkömmlichen Filter durch den abgeschiedenen Staub für Mikroorganismen einen Nährboden. Es kommt zur Vermehrung der Mikroorganismen auf den Elektrodenoberflächen und schließlich zur Ablösung. Die Mikroorganismen werden vom Luftstrom aufgenommen und verteilen sich in der Raumluft.

Zur Denaturierung von Mikroorganismen in Elektrofiltern gibt es eine Reihe von Lösungsvorschlägen. In DE 198 22 055 A1 wird beispielsweise eine denaturierende Elektrode aufgezeigt, die aus individuellen denaturierenden Lagen mit unterschiedlichen elektrischen Widerständen und unterschiedlichen pH-Werten besteht.
In DE 198 22 054 A1 wird ein Elektrofilter-Separationssystem mit einer denaturierenden Neutralisationskammer beschrieben.
Aus DE 299 10 747 U ist der Einsatz von stark alkalischen oder sauren Filtermatten zur Lösung des Problems bekannt.

Eine auf der Filteroberfläche angebrachte poröse, abwaschbare Plastikbeschichtung mit einem denaturierendem Salz wird in DE 198 07 295 A1 als Problemlösung vorgeschlagen.

Obwohl die genannten Vorschläge das Problem der Vermehrung von Mikroorganismen in Elektrofiltern und deren spätere Verteilung in der Raumluft lösen, haben sie den Nachteil, nicht ausreichend effektiv und nicht ausreichend kostengünstig zu sein. Die Anordnungen sind kompliziert und nicht genügend universell einsetzbar.

Die DE 199 12 628 A1 beschreibt eine elektrisch leitfähige, thermoplastische und hitzeaktivierbare Klebstoffolie, die sich wie folgt zusammensetzt:
i) ein thermoplastisches Polymer mit einem Anteil von 30 bis 89,9 Gew.-%,
ii) ein oder mehrere klebrigmachende Harze mit einem Anteil von 5 bis 50 Gew.-% und/oder
iii) Epoxidharze mit Härtern gegebenenfalls auch Beschleunigern, mit einem Anteil von 5 bis 40 Gew.-%,
iv) versilberte Glaskugeln oder Silberpartikel mit einem Anteil von 0,1, ganz besonders bevorzugt 10 Gew.-%, bis 40 Gew.-%.

Die Klebstoffolie ist eine Mischung von reaktiven Harzen, die bei Raumtemperatur vernetzen und ein dreidimensionales, hochfestes Polymernetzwerk bilden, und von dauerelastischen Elastomeren, die einer Versprödung des Produktes entgegenwirken.
Die insbesondere bevorzugten thermoplastischen Polyurethane (TPU) sind als Reaktionsprodukte aus Polyester- oder Polyetherpolyolen und organischen Diisocyananten wie Diphenylmethandiisocyanat bekannt. Sie sind aus überwiegend linearen Makromolekülen aufgebaut. Solche Produkte sind zumeist in Form elastischer Granulate im Handel erhältlich, zum Beispiel von der Bayer AG unter dem Handelsnamen "Desmocoll"
Die Silberpartikel können aus reinem Silber bestehen, können aber auch aus einer Legierung gefertigt sein, die dann zu einem erheblichen Anteil Silber enthalten sollte, um die Leitfähigkeit sicherzustellen.
Die elektrisch leitfähige, thermoplastische und hitzeaktivierbare Klebstoffolie dient zur dauerhaften Verbindung von zwei Gegenständen. Im Gegensatz zu Verklebungen mit einem Haftklebeband werden hierbei Festigkeiten, wie sie im konstruktiven Bereich benötigt werden, dauerhaft erreicht und auch bei chemischen, thermischen oder klimatischen Belastungen beibehalten.

Nach entsprechender Konfektionierung können Stanzlinge oder Rolle von dieser Klebstoffolie bei Raumtemperatur oder bei leicht erhöhter Temperatur auf das zu verklebende Substrat (elektronisches Bauteil, Modul etc.) aufgeklebt werden.

Die zugemischten reaktiven Harze sollten bei der leicht erhöhten Temperatur noch keine chemische Reaktion eingehen. So muß die Verklebung nicht als einstufiges Verfahren erfolgen, sondern auf eines der beiden Substrate kann einfachheitshalber, wie bei einem Haftklebeband, zunächst die Klebstoffolie geheftet werden, indem man in der Wärme laminiert. Beim eigentlichen Heißklebeprozeß mit dem zweiten Substrat härtet das Harz dann ganz oder teilweise aus und die Klebefuge erreicht die hohe Verklebungsfestigkeit, weit oberhalb denen von Haftklebesystemen.

Die Klebstofffolie ist dementsprechend insbesondere für ein Heißverpressen bei Temperaturen unter 120 °C, insbesondere bei 80 °C bis 100 °C, geeignet.

Die Verwendung von metallischen oder metallisierten Stoffen zur Erzielung elektrischer Leitfähigkeit in Klebefilmen ist weiterhin in EP 0 734 576 A1 beschrieben.

Weder die Klebstoffolie noch der Klebefilm zeigen allerdings irgendwelche Eigenschaften, die den Einsatz dieser gegen Mikroorganismen vermuten lassen.

Aus der DE 196 14 620 A1 ist ein druckempfindliches, beidseitig mit Klebemassen beschichtetes Selbstklebeband bekannt, dessen Träger von einem formulierten, vernetzten, nicht geschäumten Polyurethan gebildet ist.

Als ein Bestandteil für den Träger wird ein vernetztes, nicht geschäumtes Polyurethan eingesetzt, das mit zusätzlichen Komponenten, nämlich Füllstoffen, Weichmachern und Harzen sowie gegebenenfalls weiteren Hilfsstoffen rezeptiert wird.

Der Anteil des Polyurethans am Träger beträgt bis zu 50 Gew.-%, vorzugsweise 10 Gew.-% bis 40 Gew.-%. Die Füllstoffe machen 40 Gew.-% bis 70 Gew.-% des Trägers aus, während die Weichmacher und Harze zusammen zu 5 Gew.-% bis 30 Gew.-%, insbesondere 10 Gew.-% bis 25 Gew.-%, eingesetzt sind.

Die Auswahl der Isocyanat-Komponente des Polyurethans richtet sich nach den gezielt einzustellenden Eigenschaften des Trägers. In Frage kommen zum Beispiel Toluylendiisocyanat, Diphenylmethan-4,4'-diisocyanat, Dicyclohexylmethan-4,4'-diisocyanat, Hexamethylendiisocyanat, Isophorondiisocyanat, Gemische der genannten Isocyanate oder chemisch daraus abgeleitete Isocyanate, zum Beispiel dimerisierte oder trimerisierte Typen.

Die Auswahl der mit dem Isocyanat reagierenden Komponente richtet sich ebenfalls nach den in Abhängigkeit vom gewünschten Anforderungsprofil einzustellenden Eigenschaften des Trägers. Beispielsweise kommen in Frage alle Polyesterdiole, -triole und -polyole, Polyetherdiole, -triole und-polyole.

In einer besonders bevorzugten Ausführungsform des Selbstklebebands ist zur Bildung des Polyurethans ein hydroxyl-funktionalisiertes Polybutadien in Verbindung mit einem Diisocyanat eingesetzt.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, Kieselsäure, Silikate oder Zinkoxid. Auch Mischungen der genannten Stoffe können eingesetzt werden.

Beispiele für Weichmacher sind Phthalate, paraffinische, naphthenische oder aromatische Mineralöle. Als Harze können Phenolharze, Kohlenwasserstoffharze oder Bitumen verwendet werden.

Als Klebmassen können allgemein vorbekannte Klebmassen auf Kautschuk- oder Acrylatbasis verwendet werden.

Die DE 197 33 014 A1 offenbart ebenfalls ein druckempfindliches, doppelseitiges Selbstklebeband, umfassend einen beidseitig mit druckempfindlichen Klebemassen beschichteten Träger, der sich zusammensetzt
a) zu einem Gewichtsanteil von bis zu 50 Gew.-%, insbesondere von 30 Gew.-% bis 40 Gew.-%, aus einem vernetzten, nicht geschäumten Polyurethan,
   i) gebildet aus hydroxyl-funktionalisiertem Polybutadien, Polyesterdiol, Polyestertriol, Polyesterpolyol, Polyetherdiol, Polyethertriol oder Polyetherpolyol, Polyetherdiamin, Polyethertriamin, Polyetherpolyamin sowie einwertigem Alkohol (Mono-ol), einwertigem Amin (Mono-amin), Polyether-mono-ol, Polyethermono-amin oder aus von den vier letztgenannten Gruppen abgeleiteten Produkten
   ii) und aus Diisocyanat oder chemisch abgeleitetem Isocyanat,
   iii) wobei das Polyurethan weichmacherfrei ist,
b) zu einem Gewichtsanteil von 50 Gew.-% bis 70 Gew.-% aus Füllstoffen,
c) gegebenenfalls weiteren Hilfsstoffen.

Dieses Klebeband unterscheidet sich von demjenigen aus der DE 196 14 620 A1 insofern, als daß es weichmacherfrei ist.

Die hier offenbarten Selbstklebebänder, im wesentlichen bestehend aus einem Laminat aus einer formulierten Polyurethan-Masse und einer druckempfindlichen Klebschicht, weisen zwingend einen dreischichtigen Aufbau Klebschicht/formulierte Polyurethanmasse/Klebschicht auf.

Aufgabe der Erfindung ist es, ein vorzugsweise trägerloses, doppelseitig klebendes Klebeband zum Anbringen auf den Elektroden von Elektrofiltern in Klimaanlagen zu entwickeln, das zur Gewährleistung der elektrischen Funktionstüchtigkeit der Elektrofilter in z-Richtung elektrisch leitfähig ist und gleichzeitig eine sowohl permanent eigen- beziehungsweise haftklebrige als auch permanent alkalisch reagierende Oberfläche besitzt, so daß Mikroorganismen aus dem Luftstrom abgefangen und abgetötet beziehungsweise an der weiteren Vermehrung gehindert werden können. Weiterhin soll die Oberfläche des Klebebandes mit Leitungswasser abwaschbar sein, so daß nach Verstaubung oder anderweitiger Verschmutzung, wie sie unweigerlich im Laufe der Zeit eintritt, die ursprüngliche Haftklebrigkeit wieder hergestellt werden kann.

Gelöst wird diese Aufgabe durch ein trägerloses Klebeband, wie es im Hauptanspruch niedergelegt ist. Die Unteransprüche umfassen vorteilhafte Ausführungsformen desselben sowie eine besonders geeignete Anwendung.

Demgemäß betrifft die Erfindung ein permanent vollflächig haftklebriges, vorzugsweise trägerloses Klebeband bestehend aus einer vorzugsweise auf ein antiadhäsives Medium beschichteten Schicht eines Haftklebstoffs, wobei dieser Haftklebstoff enthält
- einen alkalisch reagierenden, festen, pulverisierten, mineralischen Füllstoff mit einem Gewichtsanteil zwischen größer 0 Gew.-% und 60 Gew.-%, bezogen auf das Gesamtgewicht des Haftklebstoffs, so daß die permanent haftklebrige Oberfläche des Klebebands einen pH-Wert von größer 8 aufweist, und
- einen leitfähigen Zusatz, insbesondere ein Metallpulver, ein mit einem Metall beschichtetes Pulver und/oder metallisierte Kügelchen, mit einem Gewichtsanteil zwischen größer 0 Gew.-% und 60 Gew.-%, so daß das Klebeband in z-Richtung, das heißt in Richtung der Dicke des Klebebands, elektrisch leitfähig ist.

In einer ersten vorteilhaften Ausgestaltung des Klebebands beträgt der Teilchendurchmesser des mineralischen Füllstoffs bezogen auf mindestens 80 % dieser Teilchen maximal 0,5 mm, bevorzugt maximal 0,1 mm.

In einer weiteren vorteilhaften Ausgestaltung des Klebebands beträgt der Teilchendurchmesser des leitfähigen Zusatzes bezogen auf mindestens 80 % dieser Teilchen mindestens 30 % der Dicke der Haftklebstoffschicht, bevorzugt mindestens 70 % der Dicke der Haftklebstoffschicht.

Vorteilhaft ist des weiteren, wenn der Gewichtsanteil des mineralischen Füllstoffs 5 Gew. % bis 40 Gew.-%, bevorzugt 5 Gew.-% bis 30 Gew.-%, ganz besonders bevorzugt 5 Gew.-% bis 20 Gew.-%, bezogen auf das Gesamtgewicht des Haftklebstoffs beträgt.

Vorteilhaft ist des weiteren, wenn der Gewichtsanteil des leitfähigen Zusatzes 10 Gew.-% bis 30 Gew.-% bezogen auf das Gesamtgewicht des Haftklebstoffs beträgt.

Als Basispolymere des Haftklebstoffs des vorzugsweise trägerlosen Klebebands kommen alle zur Rezeptierung von Haftklebstoffen üblichen Elastomere in Frage.

Bevorzugte Elastomere sind Copolymerisate auf Basis Acrylsäure, Methacrylsäure und deren Ester, Malein-, Fumar-, Itaconsäure und deren Ester, substituierte (Meth)acrylamide, weitere Vinylverbindungen, wie zum Beispiel Vinylester, Vinylacetat, Vinylalkohol und/oder deren Ester, Naturkautschuk, Styrolblockcopolymere, Polybutadien, Polyisopren, Polychloropren-Kautschuk, Butylkautschuk, Silikonkautschuk, EPDM-Kautschuk, Ethylen-Propylen-Copolymere, Polyurethane, Vinyl-Copolymere, EthylenVinylacetat-Copolymere, Vinylchlorid-Acrylat-Copolymere, Polyetherester, Polyether- und esteramide, Polycarbonat-Polyester-Copolymere, Ethylen-Acrylat-Copolymere, ABS-Copolymere.

Weiterhin können die vorgenannten Elastomere auch als Bestandteil in Polymerblends eingesetzt werden.

Die Basispolymere können in geeigneter Weise mit Harzen oder anderen Abmischkomponenten, wie zum Beispiel Füllstoffen, Weichmachern, Pigmenten, Stabilisatoren, Katalysatoren, Alterungs-, Licht- oder UV-Schutzmitteln compoundiert werden.

Als Füllstoffe können sowohl verstärkende, wie zum Beispiel Ruß, als auch nicht verstärkende, wie zum Beispiel Kreide, Bariumsulfat oder Zinkoxid eingesetzt werden.

Die Funktion der Lichtschutzmittel besteht vorrangig in der Vermeidung der Versprödung des Klebebands. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel sind für das erfindungsgemäße Klebeband geeignet. Die Menge des Lichtschutzmittels sollte mindestens 0,15 Gew.-%, vorzugsweise mindestens 0,30 Gew.-% bezogen auf die Haftklebemasse betragen.

Eine Verwendung von Antioxidantien ist vorteilhaft, aber nicht zwingend notwendig. Weitere geeignete UV-Absorber, Lichtschutz- und Alterungsschutzmittel sind in der EP 0 763 584 A1 aufgeführt, auf die hiermit ausdrücklich Bezug genommen und die Teil dieser Offenbarung wird.

Das Basispolymer des Haftklebstoffs des vorzugsweise trägerlosen Klebebands ist nach einer besonders bevorzugten Ausführungsform der Erfindung Polyurethan.

Zur Herstellung des Polyurethan basierten Haftklebstoffs können sowohl aliphatische als auch aromatische Isocyanate eingesetzt werden.

In Frage kommen zum Beispiel Isophorondiisocyanat, Hexamethylendiisocyanat, Dicyclohexylmethan-4,4'-diisocyanat, Toluylendiisocyanat, Diphenylmethan-4,4'-diisocyanat oder m-Tetramethyl-xylen-diisocyanat, Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten. Weiterhin können als Isocyanat-Komponente auch Prepolymere eingesetzt werden, also im Vorwege in einem NCO/OH-Verhältnis größer eins hergestellte Umsetzungsprodukte aus Isocyanat und Polyol.

In einer bevorzugten Ausführungsform werden als Polyol-Komponente Polypropylenglykole, Polyethylenglykole, hydrierte hydroxyl-funktionalisierte Polyisoprene, hydroxyl-funktionalisierte Polyisobutylene oder hydroxyl-funktionalisierte Polyolefine eingesetzt. In Frage kommen auch hydroxyl-funktionalisierte Polybutadiene sowie andere, hydrierte und nicht hydrierte hydroxyl-funktionalisierte Kohlenwasserstoffe. Polytetramethylenglykolether (Polytetrahydrofurane) sind ebenfalls geeignet. In Frage kommen weiterhin Polyester-Polyole sowie Gemische der genannten Polyol-Komponenten. Als Polyol-Komponente können ebenfalls Umsetzungsprodukte aus Isocyanat und Polyol eingesetzt werden, die im Vorwege in einem NCO/OH-Verhältnis kleiner 1 hergestellt wurden. Bekannte Kettenverlängerer, kurzkettige Vernetzer oder Abbrecher können ebenfalls zur Bildung der Polyurethanschicht mitverwendet werden.
Um eine geeignete Streichviskosität zu erzielen, können die Polyurethankomponenten auch mit Lösungsmitteln verdünnt werden.

Neben den aufgezählten Isocyanat-Komponenten und den damit reagierenden Polyol-Komponenten können auch andere Edukte zur Bildung des Polyurethans verwendet werden, ohne den Erfindungsgedanken zu verlassen. Insbesondere können auch Amin-funktionalisierte Komponenten, wie zum Beispiel Polyether-Amine oder amingruppenhaltige Kettenverlängerer oder Vernetzer zur Herstellung des Polyurethan basierten Haftklebstoffs mit herangezogen werden.

Um die Reaktion zwischen der Isocyanat-Komponente und der mit dem Isocyanat reagierenden Komponente zu beschleunigen, können alle dem Fachmann bekannten Katalysatoren, wie zum Beispiel tertiäre Amine, bismut- oder zinnorganische Verbindungen eingesetzt werden.

Polyurethane wie oben sind in der Herstellung Stand der Technik und beispielsweise in "Ullmann's Encyclopedia of Industrial Chemistry", Vol. A21: Polyurethanes beschrieben.

In einer möglichen Ausführungsform enthält der Polyurethan-basierte Haftklebstoff weitere Rezeptierungsbestandteile, wie zum Beispiel Füllstoffe, Pigmente, rheologische Additive, Weichmacher, Harze (Klebrigmacher), Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließund Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat oder Titandioxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Beispiele sind alle Arten organischer oder anorganischer Farbpigmente, insbesondere Weißpigmente wie etwa Titandioxid.

Beispiele für rheologische Additive sind pyrogene Kieselsäuren, Schichtsilikate (Bentonite), hochmolekulare Polyamidpulver oder Rhizinusölderivat-Pulver.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane. Besonders geeignet sind alterungsstabile Weichmacher ohne olefinische Doppelbindung.

Geeignete Harze (Klebrigmacher) sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, (C-5)₂-Harze), gemischte C-5/C-9-Harze, hydrierte und teilhydrierte Derivate der genannten Typen, Harze aus Styrol oder α-Methylstyrol sowie Terpen-Phenolharze und weitere wie aufgeführt in Ullmanns Enzyklopädie der technischen Chemie, Band 12, S. 525 bis 555 (4. Aufl.), Weinheim.

Das besonders bevorzugte Basispolymer des Haftklebstoffs aus Polyurethan kann mit geeigneten Elastomeren, wie sie im einzelnen oben aufgeführt sind, in Polymerblends abgemischt sein.

Besonders bevorzugt ist, wenn die Polymerbasis des Haftklebstoffs zu mehr als 50 Gew.-% aus Polyurethan besteht.

Eine Verwendung von Antioxidantien, zum Beispiel sterisch gehinderte Phenole (Irganox 1010 oder Tris-Nonylphenyl-phosphit), ist auch in der auf Polyurethan basierenden Haftklebemasse vorteilhaft, aber nicht zwingend notwendig.
Lichtschutzmittel und UV-Absorber können ebenso eingesetzt werden, sind aber nicht notwendig.

Als Lichtschutzmittel finden ebenfalls die bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 offenbarten Verwendung.

Die Rezeptierung der Polyurethane mit weiteren Bestandteilen, wie zum Beispiel Füllstoffen und Weichmachern, wird besonders bei der Herstellung von Dichtmassen angewendet (vergleiche "Ullmann's Encyclopedia of Industrial Chemistry, Vol. A 23: Sealing Materials").

Hinweise zur Rezeptierung und Herstellung von Polyurethan basierten Haftklebstoffen vermitteln in beispielhafter Aufzählung US 3,930,102 A1, AU 86 53399 A1, JP 59 105 069 A1, US 829,691 A1, DE 24 35 218 A1, DE 21 39 640 A1, DE 19 41 022 A1, EP 0 305 175 A1, EP 0 882 749 A1 und US 3,761,307 A1.

In einer weiteren bevorzugten Ausführungsform wird zur Bildung des Polyurethans ein NCO/OH-Verhältnis von 0,6 bis 1,2 eingestellt.

Weiterhin kann der Polyurethan basierte Haftklebstoff auch geschäumt sein. Es sind sowohl chemische als auch physikalische Schäumungstechniken möglich.

Als alkalisch reagierender Füllstoff kommen alle Mineralien in Frage, deren pH-Wert bei Benetzung mit Wasser größer 8 ist. Beispiele sind Metalloxide, insbesondere Alkalimetall- und Erdalkalimetalloxide, Metallhydroxide, insbesondere Alkalimetall- und Erdalkalimetallhydroxide, Carbonate, Phosphate und Cyanide, insbesondere jeweils von den Alkali- und Erdalkalimetallen, sowie Gemische dieser Füllstoffe oder Gemische dieser Füllstoffe mit anderen Füllstoffen.

Als Metallpulver sind insbesondere Kupfer, Silber, Gold, Aluminium, Nickel, Chrom, Eisen oder Metallegierungen oder Metallmischungen derselben geeignet. Als metallisierte Pulver oder Kügelchen kommen alle mineralischen oder Glas- oder Kunststoff basierten Pulver beziehungsweise Kügelchen in Frage, die ganz oder teilweise mit einem Metall beschichtet sind.

In der Schicht aus Haftklebstoff kann ein grobmaschiges Netz oder Gewebe eingelassen sein oder ähnliche flächige Gebilde wie durchlöcherte Folien aus Kunststoff.

Wichtig ist, daß der in die Haftklebeschicht eingelassene Körper die Funktionsfähigkeit des erfindungsgemäßen Klebebands nicht einschränkt, insbesondere nicht die Leitfähigkeit.

Der Haftklebstoff kann zur Einstellung der gewünschten Haftklebeeigenschaften chemisch oder physikalisch vernetzt sein. Eine Strahlungsvernetzung (zum Beispiel über ESH oder UV) ist ebenfalls möglich.

Die Haftklebrigkeit ist permanent auf der gesamten Oberfläche des Klebebands gegeben. Auch längere Lagerzeiten bis zu einem Jahr führen zu keinen Einbußen hinsichtlich der Haftklebrigkeit.

Gleichzeitig werden mit angefeuchtetem pH-Papier je nach der Art und Konzentration des alkalisch reagierenden Füllstoffs pH-Werte zwischen 8,5 und 12 gemessen. Bevorzugt ist dabei, wenn der ph-Wert der insbesondere angefeuchteten Haftklebstoffoberfläche mindestens 8,5 oder höher ist.

Der Durchgangswiderstand in z-Richtung beträgt je nach Art und Konzentration des Metallpulvers 0,05 bis 500 Ωm. Bevorzugt ist, wenn der Durchgangswiderstand der Haftklebstoffschicht in z-Richtung maximal 500 Ωm beträgt, weiter bevorzugt, wenn der Durchgangswiderstand der Polyurethan basierten Haftklebstoffschicht in z-Richtung maximal 1000 Ωm beträgt.

Wird die Haftklebstoffschicht mit beliebigen Mengen an Staub, Straßendreck, Erde, Sand, Fett, Öl oder anderen, die Haftklebrigkeit vermindernden Stoffen versetzt, läßt sie sich wieder leicht mit normalem Leitungswasser säubern, so daß hinterher die volle, ursprüngliche Haftklebrigkeit wieder hergestellt ist und das Klebeband, insbesondere mit der auf Polyurethan basierten Haftklebstoffschicht, uneingeschränkt wieder verwendbar ist.

Weiter vorteilhaft beträgt die Klebkraft der Haftklebstoffschicht mindestens 0,1 N/cm, besonders bevorzugt bei der Polyurethan basierten Haftklebstoffschicht mindestens 0,01 N/cm.

Im Rolling Ball Tack-Test wird mindestens ein Wert von 100 mm oder weniger erzielt, besonders bevorzugt bei der Polyurethan basierten Haftklebstoffschicht mindestens ein Wert von 300 mm oder weniger.

Die Eigenschaftskombination Haftklebrigkeit, Alkalität, Abwaschbarkeit und elektrische Leitfähigkeit in z-Richtung ist vorteilhaft ununterbrochen vollflächig auf der gesamten Oberfläche des Klebebandes und nicht nur segment - oder abschnittweise gegeben.

Die Beschichtung des Haftklebstoffs auf ein antiadhäsives Medium kann ebenso wie die Compoundierung des Haftklebstoffs aus einer Lösung oder einer Dispersion heraus erfolgen. Alternativ ist ein lösungsmittelfreier Prozeß möglich, in dem zum Beispiel der Haftklebstoff zum Zwecke der Beschichtung aufgeschmolzen wird (Extrusions-, Kalanderoder Walzenprozeß) oder in dem er erst unmittelbar vor der Beschichtung durch Vermischen zweier oder mehrerer chemisch miteinander reagierender Komponenten hergestellt wird und somit erst während der Beschichtungsphase chemisch entsteht (Mehrkomponenten-Reaktivprozeß).

Auf eine ausführliche Darstellung des Wissensstandes zum Themenkomplex "Haftklebstoffe" im "Handbook of Pressure Sensitive Adhesive Technology, Third Edition" von Donatas Satas (Satas & Associates, 1999) sei hingewiesen.

Als antiadhäsives Medium kommen alle Folien oder Papiere in Frage, von denen der Haftklebstoff nach der Applikation wieder zerstörungs- beziehungsweise schädigungsfrei entfernbar ist, also zum Beispiel Folien oder Papiere, die aufgrund ihrer Materialeigenschaften bereits genügend antiadhäsiv sind oder die mit einer antiadhäsiven Beschichtung wie etwa Silikon, Polytetrafluorethylen oder Polyethylen ausgerüstet sind.

Das mit dem Haftklebstoff beschichtete antiadhäsive Medium wird vorzugsweise zur Rolle gewickelt. Zum besseren Schutz kann der Haftklebstoff auch mit einem zweiten antiadhäsiven Medium, das mit dem ersten nicht identisch sein muß, von der offenen Seite her abgedeckt werden.

Eine trägerlose Haftklebstoffschicht, die einen alkalisch reagierenden, festen, pulverisierten, mineralischen Füllstoff, dessen Teilchendurchmesser bezogen auf mindestens 80 % dieser Teilchen maximal 0,5 mm beträgt, mit einem Gewichtsanteil zwischen gößer 0 Gew.-% und 60 Gew.-%, bezogen auf das Gesamtgewicht des Haftklebstoffs, enthält und die weiterhin mit einem Gewichtsanteil zwischen größer 0 Gew.-% und 60 Gew.-% einen leitfähigen Zusatz wie ein Metallpulver, ein mit einem Metall beschichtetes beliebiges anderes Pulver und/oder metallisierte Kügelchen (zum Beispiel metallisierte Glaskugeln) enthält, dessen Teilchendurchmesser bezogen auf mindestens 80 % dieser Teilchen mindestens 30 % der Dicke der Haftklebstoffschicht beträgt, erweist sich überraschend und für den Fachmann nicht vorhersehbar als hervorragend geeignet, die gestellten Aufgaben zu lösen, insbesondere aufgrund der erfindungsgemäßen Eigenschaftskombination der elektrischen Leitfähigkeit in z-Richtung und der gleichzeitigen sowohl permanenten Eigen- beziehungsweise Haftklebrigkeit als auch der permanent alkalisch reagierenden Oberfläche in dem erfindungsgemäßen Klebeband.

Weiterhin ist das erfindungemäße Klebeband insbesondere mit einer auf Polyurethan basierenden Haftklebstoffschicht zum Zweck der Reinigung bei Verstaubung oder anderweitiger Verschmutzung mit normalem Leitungswasser abwaschbar und hinterher in vollem Umfang wiederverwendbar.

Ein solches Klebeband ist aufgrund der Eigenschaftskombination von elektrischer Leitfähigkeit, permanenter Haftklebrigkeit und Alkalität als Klebeband zur Applikation auf Niederschlagselektroden von Elektrofiltern in Klimaanlagen geeignet.
Es gewährleistet die elektrische Grundfunktion des Elektrofilters, fängt Mikroorganismen (Bakterien, Viren, Pilze etc.) aus dem Luftstrom ab verhindert deren weitere Vermehrung beziehungsweise bewirkt deren Denaturierung und ist nach Verstaubung oder anderweitiger Verschmutzung durch Säuberung mit Leitungswasser wieder regenerierbar, das heißt die ursprüngliche Haftklebrigkeit, verbunden mit der Alkalität der Oberfläche, ist wieder herstellbar.

Zur Applikation in der Anwendung wird das Klebeband direkt auf das Substrat geklebt und das antiadhäsive Medium anschließend abgezogen. Ein, wie bei den meisten Klebebändern üblicher, stabilisierender Träger, der dem Klebeband innere Festigkeit verleiht und der mit dem Haftklebstoff dauerhaft fest verbunden ist, ist im Klebeband nicht zwingend erforderlich.

Das erfindungsgemäße Klebeband wird nachfolgend in bevorzugter Ausführung anhand mehrerer Beispiele beschrieben, ohne damit die Erfindung in irgendeiner Weise einschränken zu wollen. Des weiteren sind Vergleichsbeispiele aufgeführt, in denen untaugliche Klebebänder dargestellt sind.

Die folgenden Prüfmethoden werden eingesetzt, um die nach dem beschriebenen Verfahren hergestellten Muster kurz zu charakterisieren:
- Die Klebkraft wird nach BDF JOPMA002 bestimmt. Nach dieser Methode wird eine trägerlose Haftklebstoffschicht zunächst auf eine 26 µm dicke Polyesterfolie geklebt. Sodann wird der Verbund aus Haftklebstoffschicht und Polyesterfolie auf den Haftgrund (Stahl) aufgebracht und anschließend unter definierten Bedingungen mittels einer Zugprüfmaschine abgezogen. Der Abzugswinkel beträgt jeweils 180°, die Abzugsgeschwindigkeit 300 mm/min. Die zum Abziehen erforderliche Kraft ist die Klebkraft.
- Die Tackmessung (Messung der Oberflächenklebrigkeit) erfolgt nach der Rolling Ball Methode gemäß der BDF Prüfvorschrift JOPM 0075.
   Die Meßvorrichtung besteht demgemäß im wesentlichen aus einer schiefen Ebene, einer Stahlkugel und einem definierten Edelstahluntergrund. Die Stahlkugel von 5,6 g (11 mm Durchmesser) rollt unter einem Neigungswinkel von 21,5° die schiefe Ebene (Höhe 65 mm) hinunter auf den Haftklebstoff und wird von diesem durch seine Haftklebrigkeit abgebremst. Die Laufstrecke der Kugel auf der Haftklebstoffoberfläche gilt als Maß für den Tack. Der Tack ist somit umgekehrt proportional der zurückgelegten Strecke.
- Der pH-Wert wird durch Aufbringen von mit destilliertem Wasser angefeuchteten pH-Papier auf die Haftklebstoffoberfläche nach einer Einwirkzeit von 10 Minuten bestimmt.
- Die Messung des Durchgangswiderstandes in z-Richtung, das heißt in Richtung der Dicke der Haftklebstoffschicht, erfolgt nach ASTM-D-2739 mit einer Gewichtsbelastung von 4 Kg.

Die Beschichtung des Haftklebstoffs auf das antiadhäsive Medium (im Regelfall silikonisiertes Trennpapier) erfolgt mit einer handelsüblichen Ausstreichmaschine der Firma BASF oder im Falle von Schmelzhaftklebstoffen mit einem Extruder der Firma Werner & Pfleiderer bei Temperaturen von 170 °C bis 200 °C unter Verwendung einer Breitschlitzdüse. In jedem Fall werden Muster von 25 x 30 cm der einzelnen Haftklebstoffe gefertigt. Die Dicke der Haftklebstoffschichten wird zwischen 0,04 mm und 0,8 mm frei wählbar eingestellt.

Die Herstellungen der Naturkautschuk basierten und der EVA basierten Haftklebstoffe sowie der Schmelzhaftklebstoffe erfolgen in handelsüblichen Knetern der Firmen Stephan oder AMK.

Die Acrylat basierten Haftklebstoffe werden in einem Rührkessel-Reaktor der Firma Juchheim gefertigt.

Die Herstellung der A-Komponenten der lösungsmittelfreien Polyurethan-Haftklebstoffe erfolgt in einem handelsüblichen Dissolver der Firma Molteni. Das Vermischen mit der B-Komponente (dem Isocyanat) unmittelbar vor der Beschichtung erfolgt mit einer Zwei-Komponenten-Misch- und Dosieranlage der Firma Spritztechnik-EMC.

Die Herstellung der Polyurethan basierten Haftklebstoffe erfolgt lösungsmittelfrei im Zweikomponenten-Reaktivverfahren. Dazu wird in den Beispielen zuerst jeweils die A-Komponente durch Mischen der entsprechenden Ausgangsstoffe in einem handelsüblichen, evakuierbaren Dissolver der Firma Molteni hergestellt. Zur Erzielung von Blasenfreiheit erfolgt dies unter Anlegen von Vakuum. Die Mischzeit beträgt jeweils ca. 2h.

Das Vermischen mit der B-Komponente (dem Isocyanat) unmittelbar vor der Beschichtung erfolgt mit einer Zwei-Komponenten-Misch- und Dosieranlage der Firma Spritztechnik-EMC. Das Mischsystem ist dynamisch. Der Mischkopf ist für zwei flüssige Komponenten konzipiert. Der Mischrotor hat eine variable Drehzahl bis max. ca. 5000 U/min. Bei den Dosierpumpen dieser Anlage handelt es sich um Zahnradpumpen mit einer Förderleistung von max. ca. 2l/min.

Die Mischung wird auf silikonisiertes Trennpapier aufgetragen.
Die chemische Umsetzung der beiden gemischten Komponenten zum Haftklebstoff erfolgt bei 70°C in einem Trockenschrank.

### Beispiele

Die Beschreibung des erfindungsgemäßen Klebebands erfolgt anhand von fünf beispielhaften, bekannten Haftklebstoffen unterschiedlicher Polymer- beziehungsweise Rohstoffbasis, die im folgenden dargestellt sind. Diese Rezepturen bilden die Grundlage für die Einzelbeispiele 1 bis 25, in denen das erfindungsgemäße Klebeband beschrieben wird, sowie für die Vergleichsbeispiele.

### Bekannter Haftklebstoff 1:

### (Acrylatcopolymer-basierterTyp)

Ein für radikalische Polymerisationen konventioneller 2 1-Reaktor wird mit
- 20 g Hydroxypropylacrylat
- 60 g Methylacrylat
- 210 g Ethylhexylacrylat
- 210 g Butylacrylat
- 300 g Aceton / Siedegrenzbenzin 60/95 (1:1)
befüllt. Nach 45 Minuten Durchleiten von Stickstoffgas unter Rühren werden der Reaktor auf 58 °C hochgeheizt und 0,2 g Azoisobutyronitril (AIBN) hinzugegeben. Anschließend wird das äußere Heizbad auf 75 °C erwärmt und die Reaktion konstant bei dieser Temperatur durchgeführt.

Nach 1h Reaktionszeit werden wiederum 0,2 g AIBN hinzugegeben.

Nach 2,5 h und 5 h wird mit jeweils 150 g Aceton/Siedegrenzenbenzin 60/95 (1:1) verdünnt.

Die Reaktion wird nach 48 h Reaktionszeit abgebrochen und auf Raumtemperatur abgekühlt.

Nach dem Zumischen des alkalisch reagierenden Füllstoffs und des Metallpulvers (siehe die jeweiligen Einzelbeispiele) werden noch, bezogen auf die obigen Mengenverhältnisse, 2,5 g Desmodur Z® zugegeben.

### Bekannter Haftklebstoff 2:

### (Naturkautschuk-basierter Typ)

Es wird ein nach üblichen, bekannten Methoden in einem Kneter hergestellter Haftklebstoff der folgenden Zusammensetzung eingesetzt:

| Gewichtsanteil (Gew.-%) | Handelsname | Chemische Basis | Hersteller / Lieferant |
|---|---|---|---|
| 46,0 | Naturkautschuk SMR CV50® | Naturkautschuk | Weber & Schaer |
| 26,0 | Zonarez B 115 S® | Poly-beta-Pinenharz | Arizona |
| 10,0 | Dertophene T 110® | Terpenphenolharz | DRT |
| 7,0 | Resin 731 D® | Kolophoniumharz | Abieta |
| 7,0 | Nipol 1312 LV® | Acrylnitril-Butadien-Copolymer | Zeon |
| 3,0 | Zinkoxid Weißsiegel® | Zinkoxid | Grillo |
| 1,0 | Irganox 1010® | sterisch gehindertes Phenol | Ciba-Geigy |

Der Haftklebstoff wird in einer Konzentration von 20 % in Benzin/Ethanol (100:5) hergestellt und eingesetzt.

### Bekannter Haftklebstoff 3:

### (Styrolblockcopolymer-basierter Typ)

Es wird ein nach üblichen, bekannten Methoden in einem Kneter hergestellter Haftklebstoff der folgenden Zusammensetzung lösemittelfrei eingesetzt:

| Gewichtsanteil (Gew.-%) | Handelsname | Chemische Basis | Hersteller / Lieferant |
|---|---|---|---|
| 45,0 | Vector 4113® | Styrol-lsopren-Styrol Block-copolymer | Exxon Mobil |
| 45,0 | Escorez 2203® | Aromatmodifiziertes C-5 - Kohlenwasserstoffharz | Exxon Mobil |
| 9,0 | Ondina G41® | Weißöl | Shell Chemicals |
| 1,0 | lrganox 1010® | sterisch gehindertes Phenol | Ciba-Geigy |

### Bekannter Haftklebstoff 4:

### (EVA-basierter Typ)

Es wird ein nach üblichen, bekannten Methoden in einem Kneter hergestellter Haftklebstoff der folgenden Zusammensetzung in einer Konzentration von 30 % in Toluol eingesetzt:

| Gewichtsanteil (Gew.-%) | Handelsname | Chemische Basis | Hersteller / Lieferant |
|---|---|---|---|
| 70,0 | Levapren 456® | Polyethylenvinylacetat mit einem Vinylacetat-Gehalt von 45 % | Bayer |
| 30,0 | Foral 85® | hydriertes Kolophoniumesterharz | Hercules / Eastman |

### Bekannter Haftklebstoff 5:

### (Polyurethan-basierter Typ)

Die folgenden Rohstoffe bilden die A-Komponente des Zweikomponenten-Haftklebstoffs und werden lösemittelfrei nach bekannten Methoden unter Anlegen von Vakuum zwecks Entgasung in einem Dissolver 2 Stunden gemischt.

| A-Komponente: | | | |
|---|---|---|---|
| Gewichtsanteil (Gew.-%) | Handelsname | Chemische Basis | Hersteller / Lieferant |
| 6,4 | Arcol 1004® | Polypropylenglykol, Diol | Bayer |
| 88,5 | Baycoll BT 5031® | Polypropylenglykol, Triol | Bayer |
| 4,8 | Aerosil R202® | hydrophobierte, pyrogene Kieselsäure | Degussa |
| 0,3 | Mark DBTL® | Dibutylzinndilaurat | Nordmann, Rassmann |

Die B-Komponente ist Isophorondiisocyanat (Handelsname: Vestanat IPDI, Hersteller: Hüls). Auf 100 Teile der obigen A-Komponente sind 7,8 Teile IPDI erforderlich. Das NCO/OH-Verhältnis beträgt dann 0,95. Die B-Komponente wird erst nach dem Zumischen des alkalisch reagierenden Füllstoffs und des Metallpulvers (siehe Einzelbeispiele) unmittelbar vor der Beschichtung mittels einer Zweikomponenten-Misch- und Dosieranlage zugegeben.

Zur Beschreibung des erfindungsgemäßen Klebebands werden in den Beispielen die folgenden alkalisch reagierenden Füllstoffe eingesetzt:

**Tabelle 1:**

| In den Beispielen verwendete alkalisch reagierende Füllstoffe | | | |
|---|---|---|---|
| Handelsname | Chemische Basis / Beschreibung | Hersteller / Lieferant | Teilchendurchmesser von mindestens 80 % der Teilchen |
| Weißfeinkalk® | Calciumoxid-Pulver | RWK | < 0,1 mm |
| Natriumcarbonat-Pulver | Natriumcarbonat-Pulver | Aldrich | < 0,5 mm |
| Natriumcarbonat-Granulat | Natriumcarbonat-Granulat | Aldrich | > 0,5 mm |
| Kaliumcarbonat-Pulver | Kaliumcarbonat-Pulver | Aldrich | < 0,5 mm |

Weiterhin werden zur Beschreibung des erfindungsgemäßen Klebebands in den Beispielen die folgenden Metallpulver eingesetzt:

**Tabelle 2:**

| In den Beispielen verwendete Metallpulver | | | |
|---|---|---|---|
| Handelsname | Metall/ Beschreibung | Hersteller / Lieferant | Teilchendurchmesser von mindestens 80 % der Teilchen |
| ECKA-Kupfer CH-S24® | dendritisches Kupfer-Pulver | Eckart | < 0,16 mm |
| ECKA-Kupfer CH-S Nr.34862/G AG 5® | dendritisches Kupfer-Pulver mit Silberbeschichtung | Eckart | < 0,045 mm |
| STANDART Aluminium-Pulver Lack NOT® | blättchenförmiges Aluminium-Pulver | Eckart | < 0,125 mm |
| CONDUKT-O-FIL S-3000-S3M® | Silber-beschichtete Glas-kügelchen en | Potters-Ballotini | < 0,05 mm |

### Beispiel 1

Der Haftklebstoff des erfindungsgemäßen Klebebands setzt sich wie folgt zusammen:
- 65 Gew.-% Feststoffanteil des bekannten Haftklebstoffs 1
- 15 Gew.-% Natriumcarbonat-Pulver
- 20 Gew.-% ECKA-Kupfer CH-S 24®

Zur Herstellung werden 1100 g der abgekühlten Lösung des bekannten Haftklebstoffs 1 (entsprechend 500 g Feststoff) mit 115 g Natriumcarbonat-Pulver und 154 g ECKA-Kupfer CH-S 24® versetzt. Nach Zugabe des Desmodur Z® wird 1 gerührt.
Sodann wird der Haftklebstoff aus Lösung auf ein silikonisiertes Trennpapier aufgetragen und in einem Trockenschrank zunächst bei 60 °C und nach 10 Minuten bei 120 °C getrocknet und vernetzt.

Die Dicke der Haftklebstoffschicht wird auf
a) 0,06 mm und auf
b) 0,1 mm
eingestellt.

Die Klebkraft der Haftklebstoffschicht beträgt
a) 1,3 N/cm,
b) 1,6 N/cm.

Die Rolling Ball Tack-Werte sind:
a) 25 mm,
b) 18 mm.

Der pH-Wert beträgt jeweils 9,0 bis 9,5.

Der Durchgangswiderstand in z-Richtung beträgt:
a) 0,5 Ωm,
b) 3,1 Ωm.

Nach einem Jahr Lagerzeit sind die Werte unverändert.

### Beispiel 2

Der Haftklebstoff des erfindungsgemäßen Klebebands setzt sich wie folgt zusammen:
- 65 Gew.-% Feststoffanteil des bekanntes Haftklebstoffs 1
- 15 Gew.-% Weißfeinkalk®
- 20 Gew.-% ECKA-Kupfer CH-S 24®

Zur Herstellung werden 1100 g der abgekühlten Lösung des bekannten Haftklebstoffs 1 (entsprechend 500 g Feststoff) mit 115 g Weißfeinkalk® und 154 g ECKA-Kupfer CH-S 24® versetzt. Nach Zugabe des Desmodur Z® wird 1h gerührt.

Sodann wird der Haftklebstoff aus Lösung auf ein silikonisiertes Trennpapier aufgetragen und in einem Trockenschrank zunächst bei 60 °C und nach 10 Minuten bei 120°C getrocknet und vernetzt.

Die Dicke der Haftklebstoffschicht wird auf a) 0,06 mm und auf b) 0,1 mm eingestellt. Die Klebkraft der Haftklebstoffschicht beträgt a) 1,1 N/cm und b) 1,3 N/cm.
Die Rolling Ball Tack-Werte sind a) 39 mm und b) 25 mm.
Der pH-Wert beträgt jeweils 10,0 bis 10,5.
Der Durchgangswiderstand in z-Richtung beträgt a) 0,4 Ωm und b) 2,4 Ωm.

Nach einem Jahr Lagerzeit sind die Werte unverändert.

### Beispiel 3

Der Haftklebstoff des erfindungsgemäßen Klebebands setzt sich wie folgt zusammen:
- 65 Gew.-% Feststoffanteil des bekanntes Haftklebstoffs 1
- 15 Gew.-% Weißfeinkalk®
- 20 Gew.-% CONDUKT-O-FIL S-3000-S3M®

Zur Herstellung werden 1100 g der abgekühlten Lösung des bekannten Haftklebstoffs 1 (entsprechend 500 g Feststoff) mit 115 g Weißfeinkalk® und 154 g CONDUKT-O-FIL S-3000-S3M® versetzt. Nach Zugabe des Desmodur Z® wird 1h gerührt.
Sodann wird der Haftklebstoff aus Lösung auf ein silikonisiertes Trennpapier aufgetragen und in einem Trockenschrank zunächst bei 60 °C und nach 10 Minuten bei 120 °C getrocknet und vernetzt.

Die Dicke der Haftklebstoffschicht wird auf a) 0,06 mm und auf b) 0,1 mm eingestellt.
Die Klebkraft der Haftklebstoffschicht beträgt a) 0,9 N/cm und b) 1,2 N/cm.
Die Rolling Ball Tack-Werte sind a) 33 mm und b) 26 mm.
Der pH-Wert beträgt jeweils 9,5 bis 10,0.
Der Durchgangswiderstand in z-Richtung beträgt a) 1,4 Ωm und b) 27,1 Ωm.

Nach einem Jahr Lagerzeit sind die Werte unverändert.

### Beispiel 4

Der Haftklebstoff des erfindungsgemäßen Klebebands setzt sich wie folgt zusammen:
- 65 Gew.-% Feststoffanteil des bekannten Haftklebstoffs 2
- 15 Gew.-% Natriumcarbonat-Pulver
- 20 Gew.-% ECKA-Kupfer CH-S 24®

Zur Herstellung werden 325 g des in 20 %iger Benzin/Ethanol-Lösung vorliegenden, bekannten Haftklebstoffs 2 (entsprechend 65 g Feststoff) mit 15 g Natriumcarbonat-Pulver und 20 g ECKA-Kupfer CH-S 24® versetzt.

Nach 1 h Knetzeit wird der Haftklebstoff aus Lösung auf eine silikonisierte Trennfolie aufgetragen und in einem Trockenschrank zunächst bei 60 °C und nach 10 Minuten bei 110 °C getrocknet.

Die Dicke der Haftklebstoffschicht wird auf a) 0,06 mm und auf b) 0,1 mm eingestellt.
Die Klebkraft der Haftklebstoffschicht beträgt a) 1,4 N/cm und b) 1,8 N/cm.
Die Rolling Ball Tack-Werte sind a) 20 mm und b) 15 mm.
Der pH-Wert beträgt jeweils 8,5 bis 9,0.
Der Durchgangswiderstand in z-Richtung beträgt a) 0,7 Ωm und b) 1,4 Ωm.

Nach einem Jahr Lagerzeit sind die Werte unverändert.

### Beispiel 5

Der Haftklebstoff des erfindungsgemäßen Klebebands setzt sich wie folgt zusammen:
- 65 Gew.-% Feststoffanteil des bekannten Haftklebstoffs 2
- 15 Gew.-% Natriumcarbonat / Kaliumcarbonat-Pulver (Mischungsverhältnis 1:1)
- 20 Gew.-% ECKA-Kupfer CH-S 24®

Zur Herstellung werden 325 g des in 20 %iger Benzin/Ethanol-Lösung vorliegenden, bekannten Haftklebstoffs 2 (entsprechend 65 g Feststoff) mit 15 g Natriumcarbonat/Kaliumcarbonat-Pulver (Mischungsverhältnis 1:1) und 20 g ECKA-Kupfer CH-S 24® versetzt.

Nach 1 h Knetzeit wird der Haftklebstoff aus Lösung auf eine silikonisierte Trennfolie aufgetragen und in einem Trockenschrank zunächst bei 60 °C und nach 10 Minuten bei 110 °C getrocknet.

Die Dicke der Haftklebstoffschicht wird auf a) 0,06 mm und auf b) 0,1 mm eingestellt.
Die Klebkraft der Haftklebstoffschicht beträgt a) 1,3 N/cm und b) 1,6 N/cm.
Die Rolling Ball Tack-Werte sind a) 18 mm und b) 13 mm.
Der pH-Wert beträgt jeweils 8,5 bis 9,0.

Der Durchgangswiderstand in z-Richtung beträgt a) 0,6 Ωm und b) 1,3 Ωm.

Nach einem Jahr Lagerzeit sind die Werte unverändert.

### Beispiel 6

Der Haftklebstoff des erfindungsgemäßen Klebebands setzt sich wie folgt zusammen:
- 65 Gew.-% Feststoffanteil des bekannten Haftklebstoffs 2
- 15 Gew.-% Weißfeinkalk®
- 20 Gew.-% ECKA-Kupfer CH-S Nr. 34862 / G AG 5®

Zur Herstellung werden 325 g des in 20 %iger Benzin/Ethanol-Lösung vorliegenden, bekannten Haftklebstoffs 2 (entsprechend 65 g Feststoff) mit 15 g Weißfeinkalk® und 20 g ECKA-Kupfer CH-S Nr. 34862/G AG 5® versetzt.

Nach 1 h Knetzeit wird der Haftklebstoff aus Lösung auf eine silikonisierte Trennfolie aufgetragen und in einem Trockenschrank zunächst bei 60 °C und nach 10 Minuten bei 110 °C getrocknet.

Die Dicke der Haftklebstoffschicht wird auf a) 0,06 mm und auf b) 0,1 mm eingestellt.
Die Klebkraft der Haftklebstoffschicht beträgt a) 1,4 N/cm und b) 1,7 N/cm.
Die Rolling Ball Tack-Werte sind a) 20 mm und b) 16 mm.
Der pH-Wert beträgt jeweils 9,5 bis 10,0.
Der Durchgangswiderstand in z-Richtung beträgt a) 2,4 Ωm und b) 36,1 Ωm.

Nach einem Jahr Lagerzeit sind die Werte unverändert.

### Beispiel 7

Der Haftklebstoff des erfindungsgemäßen Klebebands setzt sich wie folgt zusammen:
- 65 Gew.-% bekannter Haftklebstoff 3
- 15 Gew.-% Weißfeinkalk®
- 20 Gew.-% ECKA-Kupfer CH-S 24®

Zur Herstellung werden 3250 g des bekannten Haftklebstoffs 3 mit 750 g Weißfeinkalk® und 1000 g ECKA-Kupfer CH-S 24® versetzt.
Nach 1 h Knetzeit wird der Haftklebstoff im Extrusionsverfahren auf eine silikonisierte Trennfolie aufgetragen.

Die Dicke der Haftklebstoffschicht wird auf a) 0,06 mm und auf b) 0,1 mm eingestellt.
Die Klebkraft der Haftklebstoffschicht beträgt a) 2,2 N/cm und b) 2,9 N/cm.
Die Rolling Ball Tack-Werte sind a) 18 mm und b) 7 mm.
Der pH-Wert beträgt jeweils 9,5 bis 10,0.
Der Durchgangswiderstand in z-Richtung beträgt a) 0,5 Ωm und b) 1,3 Ωm.

Nach einem Jahr Lagerzeit sind die Werte unverändert.

### Beispiel 8

Der Haftklebstoff des erfindungsgemäßen Klebebands setzt sich wie folgt zusammen:
- 65 Gew.-% bekannter Haftklebstoff 3
- 15 Gew.-% Weißfeinkalk®
- 20 Gew.-% ECKA-Kupfer CH-S Nr. 34862 / G AG 5®

Zur Herstellung werden 3250 g des bekannten Haftklebstoffs 3 mit 750 g Weißfeinkalk® und 1000 g ECKA-Kupfer CH-S Nr. 34862/G AG 5® versetzt.
Nach 1 h Knetzeit wird der Haftklebstoff im Extrusionsverfahren auf eine silikonisierte Trennfolie aufgetragen.

Die Dicke der Haftklebstoffschicht wird auf a) 0,06 mm und auf b) 0,1 mm eingestellt.
Die Klebkraft der Haftklebstoffschicht beträgt a) 2,4 N/cm und b) 2,8 N/cm.
Die Rolling Ball Tack-Werte sind a) 16 mm und b) 9 mm.

Der pH-Wert beträgt jeweils 9,5 bis 10,0.
Der Durchgangswiderstand in z-Richtung beträgt a) 1,8 Ωm und b) 20,4 Ωm.

Nach einem Jahr Lagerzeit sind die Werte unverändert.

### Beispiel 9

Der Haftklebstoff des erfindungsgemäßen Klebebands setzt sich wie folgt zusammen:
- 65 Gew.-% bekannter Haftklebstoff 3
- 15 Gew.-% Weißfeinkalk®
- 20 Gew.-% STANDART Aluminiumpulver Lack NOT®

Zur Herstellung werden 3250 g des bekannten Haftklebstoffs 3 mit 750 g Weißfeinkalk® und 1000 g STANDART Aluminiumpulver Lack NOT® versetzt.
Nach 1 h Knetzeit wird der Haftklebstoff im Extrusionsverfahren auf eine silikonisierte Trennfolie aufgetragen.

Die Dicke der Haftklebstoffschicht wird auf a) 0,06 mm und auf b) 0,1 mm eingestellt. Die Klebkraft der Haftklebstoffschicht beträgt a) 1,7 N/cm, b) 1,9 N/cm. Die Rolling Ball Tack-Werte sind a) 25 mm, b) 17 mm. Der pH-Wert beträgt jeweils 9,5-10,0. Der Durchgangswiderstand in z-Richtung beträgt a) 85,6 Ωm, b) 130,3 Ωm. Nach einem Jahr Lagerzeit sind die Werte unverändert.

### Beispiel 10

Der Haftklebstoff des erfindungsgemäßen Klebebands setzt sich wie folgt zusammen:
- 65 Gew.-% Feststoffanteil des bekannten Haftklebstoffs 4
- 15 Gew.-% Weißfeinkalk®
- 20 Gew.-% ECKA-Kupfer CH-S 24®

Zur Herstellung werden 300 g des in Toluol in 30 %iger Konzentration vorliegenden, bekannten Haftklebstoffs 4 (entsprechend 90 g Feststoff) mit 21 g Weißfeinkalk® und 28 g ECKA-Kupfer CH-S 24® versetzt.

Nach 1 h Knetzeit wird der Haftklebstoff aus Lösung auf ein silikonisiertes Trennpapier aufgetragen und in einem Trockenschrank zunächst bei 60 °C und nach 10 Minuten bei 130 °C getrocknet.

Die Dicke der Haftklebstoffschicht wird auf a) 0,06 mm und auf b) 0,1 mm eingestellt. Die Klebkraft der Haftklebstoffschicht beträgt a) 0,8 N/cm und b) 1,1 N/cm. Die Rolling Ball Tack-Werte sind a) 33 mm und b) 28 mm. Der pH-Wert beträgt jeweils 9,5 bis 10,0.
Der Durchgangswiderstand in z-Richtung beträgt a) 0,3 Ωm und b) 4,9 Ωm.

Nach einem Jahr Lagerzeit sind die Werte unverändert.

### Beispiel 11

Der Haftklebstoff des erfindungsgemäßen Klebebands setzt sich wie folgt zusammen:
- 65 Gew.-% Feststoffanteil des bekannten Haftklebstoffs 4
- 15 Gew.-% Weißfeinkalk®
- 20 Gew.-% CONDUKT-O-FIL S-3000-S3M®

Zur Herstellung werden 300 g des in Toluol in 30 %iger Konzentration vorliegenden, bekannten Haftklebstoffs 4 (entsprechend 90 g Feststoff) mit 21 g Weißfeinkalk® und 28 g CONDUKT-O-FIL S-3000-S3M® versetzt.
Nach 1 h Knetzeit wird der Haftklebstoff aus Lösung auf ein silikonisiertes Trennpapier aufgetragen und in einem Trockenschrank zunächst bei 60 °C und nach 10 Minuten bei 130 °C getrocknet.

Die Dicke der Haftklebstoffschicht wird auf a) 0,06 mm und auf b) 0,1 mm eingestellt.
Die Klebkraft der Haftklebstoffschicht beträgt a) 0,7 N/cm und b) 0,9 N/cm.

Die Rolling Ball Tack-Werte sind a) 40 mm und b) 31 mm.
Der pH-Wert beträgt jeweils 9,5 bis 10,0.
Der Durchgangswiderstand in z-Richtung beträgt a) 1,9 Ωm und b) 33,2 Ωm.

Nach einem Jahr Lagerzeit sind die Werte unverändert.

### Beispiel 12

Der Haftklebstoff des erfindungsgemäßen Klebebands setzt sich wie folgt zusammen:
- 35 Gew.-% bekannter Haftklebstoff 5
- 5 Gew.-% Weißfeinkalk®
- 60 Gew.-% ECKA-Kupfer CH-S 24®

Zur Herstellung werden 300 g der A-Komponente des bekannten Haftklebstoffs 5 mit 46,2 g Weißfeinkalk® und schrittweise mit 554,4 g ECKA-Kupfer CH-S 24® versetzt. Nach 2 h Mischzeit am Dissolver unter Vakuum werden 23,4 g Vestanat IPDI® (B-Komponente) mittels einer 2K-Misch- und Dosieranlage zugemischt und die Mischung wird auf ein silikonisiertes Trennpapier aufgetragen.

Die chemische Umsetzung der beiden gemischten Komponenten zum Haftklebstoff erfolgt bei 70 °C in einem Trockenschrank.

Die Dicke der Haftklebstoffschicht wird auf a) 0,06 mm und auf b) 0,1 mm eingestellt.
Die Klebkraft der Haftklebstoffschicht beträgt a) 0,1 N/cm und b) 0,1 N/cm.
Die Rolling Ball Tack-Werte sind a) 95 mm und b) 90 mm.
Der pH-Wert beträgt jeweils 8,5.
Der Durchgangswiderstand in z-Richtung beträgt a) 0,06 Ωm und b) 0,09 Ωm.

Nach einem Jahr Lagerzeit sind die Werte unverändert.

### Beispiel 13

Der Haftklebstoff des erfindungsgemäßen Klebebands setzt sich wie folgt zusammen:
- 65 Gew.-% bekannter Haftklebstoff 5
- 15 Gew.-% Weißfeinkalk®
- 20 Gew.-% ECKA-Kupfer CH-S 24®

Zur Herstellung werden 300 g der A-Komponente des bekannten Haftklebstoffs 5 mit 74,6 g Weißfeinkalk® und 99,5 g ECKA-Kupfer CH-S 24® versetzt.
Nach 2 h Mischzeit am Dissolver unter Vakuum werden 23,4 g Vestanat IPDI® (B-Komponente) mittels einer 2K-Misch- und Dosieranlage zugemischt und die Mischung wird auf ein silikonisiertes Trennpapier aufgetragen.
Die chemische Umsetzung der beiden gemischten Komponenten zum Haftklebstoff erfolgt bei 70 °C in einem Trockenschrank.

Die Dicke der Haftklebstoffschicht wird auf a) 0,06 mm und auf b) 0,1 mm eingestellt. Die Klebkraft der Haftklebstoffschicht beträgt a) 1,4 N/cm und b) 1,8 N/cm.
Die Rolling Ball Tack-Werte sind a) 16 mm und b) 9 mm.
Der pH-Wert beträgt jeweils 9,5 bis 10,0.
Der Durchgangswiderstand in z-Richtung beträgt a) 0,3 Ωm und b) 0,9 Ωm.

Nach einem Jahr Lagerzeit sind die Werte unverändert.

### Beispiel 14

Der Haftklebstoff des erfindungsgemäßen Klebebands setzt sich wie folgt zusammen:
- 55 Gew.-% bekannter Haftklebstoff 5
- 40 Gew.-% Weißfeinkalk®
- 5 Gew.-% ECKA-Kupfer CH-S 24®

Zur Herstellung werden 300 g der A-Komponente des bekannten Haftklebstoffs 5 mit 235,2 g Weißfeinkalk® und 29,4 g ECKA-Kupfer CH-S 24® versetzt.
Nach 2 h Mischzeit am Dissolver unter Vakuum werden 23,4 g Vestanat IPDI® (B-Komponente) mittels einer 2K-Misch- und Dosieranlage zugemischt und die Mischung wird auf ein silikonisiertes Trennpapier aufgetragen.

Die chemische Umsetzung der beiden gemischten Komponenten zum Haftklebstoff erfolgt bei 70 °C in einem Trockenschrank.

Die Dicke der Haftklebstoffschicht wird auf a) 0,06 mm und auf b) 0,1 mm eingestellt. Die Klebkraft der Haftklebstoffschicht beträgt a) 0,1 N/cm und b) 0,2 N/cm.
Die Rolling Ball Tack-Werte sind a) 88 mm und b) 69 mm.
Der pH-Wert beträgt jeweils 12,0.
Der Durchgangswiderstand in z-Richtung beträgt a) 160 Ωm und b) 420 Ωm.

Nach einem Jahr Lagerzeit sind die Werte unverändert.

### Beispiel 15

Der Haftklebstoff des erfindungsgemäßen Klebebands setzt sich wie folgt zusammen:
- 65 Gew.-% bekannter Haftklebstoff 5
- 15 Gew.-% Weißfeinkalk®
- 20 Gew.-% ECKA-Kupfer CH-S Nr. 34862 / G AG 5®

Zur Herstellung werden 300 g der A-Komponente des bekannten Haftklebstoffs 5 mit 74,6 g Weißfeinkalk® und 99,5 g ECKA-Kupfer CH-S Nr. 34862/G AG 5® versetzt.
Nach 2 h Mischzeit am Dissolver unter Vakuum werden 23,4 g Vestanat IPDI® (B-Komponente) mittels einer 2K-Misch- und Dosieranlage zugemischt, und die Mischung wird auf ein silikonisiertes Trennpapier aufgetragen.
Die chemische Umsetzung der beiden gemischten Komponenten zum Haftklebstoff erfolgt bei 70 °C in einem Trockenschrank.

Die Dicke der Haftklebstoffschicht wird auf a) 0,06 mm und auf b) 0,1 mm eingestellt. Die Klebkraft der Haftklebstoffschicht beträgt a) 1,3 N/cm und b) 1,7 N/cm.
Die Rolling Ball Tack-Werte sind a) 17 mm und b) 9 mm.
Der pH-Wert beträgt jeweils 9,5 bis 10,0.
Der Durchgangswiderstand in z-Richtung beträgt a) 7,3 Ωm und b) 44,1 Ωm.

Nach einem Jahr Lagerzeit sind die Werte unverändert.

### Beispiele 16 bis 25

In Tabelle 3 sind die zur Herstellung einer Polyurethan basierten Haftklebstoffschicht verwendeten Basismaterialien aufgeführt, und zwar jeweils mit Handelsnamen und Hersteller. Die genannten Chemikalien sind alle frei im Handel erhältlich.

**Tabelle 3:**

| Zur Herstellung der Polyurethan basierten Haftklebstoffschicht eingesetzte Basismaterialien mit Handelsnamen und Hersteller | | |
|---|---|---|
| Handelsname | Chemische Basis | Hersteller / Lieferant |
| Arcol 1004® | Polypropylenglykol, Diol (M=430) | Bayer |
| Arcol P 1000 N® | Polypropylenglykol, Diol (M=1000) | Bayer |
| Arcol 1067S® | Polypropylenglykol, Triol (M=1000) | Bayer |
| Baycoll BT 5031® | Polypropylenglykol, Triol (M=6200) | Bayer |
| Mark DBTL® | Dibutylzinndilaurat | Nordmann, Rassmann |
| Vestanat IPDI ® | Isophorondiisocyanat | Hüls |
| Aerosil R202® | Hydrophobierte, pyrogene Kieselsäure | Degussa |

Zur Beschreibung des erfindungsgemäßen Polyurethan basierten Klebebands werden in den folgenden Beispielen die alkalisch reagierenden Füllstoffe und Metallpulver eingesetzt, wie sie in den Tabellen 1 und 2 gezeigt sind.

### Beispiel 16

Der Haftklebstoff des erfindungsgemäßen Polyurethan basierendes Klebebands setzt sich wie folgt zusammen:

| | Rohstoff | Gewichtsanteil [Gew.-%] |
|---|---|---|
| A-Komponente | Arcol 1004 ® | 2,0 |
| | Baycoll BT 5031 ® | 27,4 |
| | ECKA-Kupfer CH-S 24 ® | 60,0 |
| | Weissfeinkalk ® | 5,0 |
| | Aerosil R 202 ® | 3,0 |
| | Mark DBTL ® | 0,2 |
| B-Komponente | Vestanat IPDI ® | 2,4 |

Die Dicke der Haftklebstoffschicht wird auf a) 0,06 mm und auf b) 0,1 mm eingestellt. Die Klebkraft der Haftklebstoffschicht beträgt a) 0,1 N/cm und b) 0,1 N/cm.
Die Rolling Ball Tack-Werte sind a) 95 mm und b) 90 mm.
Der pH-Wert beträgt jeweils 8,5.
Der Durchgangswiderstand in z-Richtung beträgt a) 0,06 Ωm und b) 0,09 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 17

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol 1004 ® | 3,8 |
| | Baycoll BT 5031 ® | 53,3 |
| | ECKA-Kupfer CH-S 24 ® | 20,0 |
| | Weissfeinkalk ® | 15,0 |
| | Aerosil R 202 ® | 3,0 |
| | Mark DBTL ® | 0,2 |
| B-Komponente | Vestanat IPDI ® | 4,7 |

Die Dicke der Haftklebstoffschicht wird auf a) 0,06 mm und auf b) 0,1 mm eingestellt. Die Klebkraft der Haftklebstoffschicht beträgt a) 1,4 N/cm und b) 1,8 N/cm.
Die Rolling Ball Tack-Werte sind a) 16 mm und b) 9 mm.
Der pH-Wert beträgt jeweils 9,5 bis 10.
Der Durchgangswiderstand in z-Richtung beträgt a) 0,3 Ωm und b) 0,9 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 18

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol 1004 ® | 3,2 |
| | Baycoll BT 5031 ® | 44,6 |
| | ECKA-Kupfer CH-S 24 ® | 5,0 |
| | Weissfeinkalk ® | 40,0 |
| | Aerosil R 202 ® | 3,0 |
| | Mark DBTL ® | 0,2 |
| B-Komponente | Vestanat IPDI ® | 4,0 |

Die Dicke der Haftklebstoffschicht wird auf a) 0,06 mm und auf b) 0,1 mm eingestellt. Die Klebkraft der Haftklebstoffschicht beträgt a) 0,1 N/cm und b) 0,2 N/cm.
Die Rolling Ball Tack-Werte sind a) 88 mm und b) 69 mm.
Der pH-Wert beträgt jeweils 12.
Der Durchgangswiderstand in z-Richtung beträgt a) 160 Ωm und b) 420 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 19

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol 1004 ® | 3,8 |
| | Baycoll BT 5031 ® | 53,3 |
| | ECKA-Kupfer CH-S Nr. 34862 / G AG 5 ® | 20,0 |
| | Weissfeinkalk ® | 15,0 |
| | Aerosil R 202 ® | 3,0 |
| | Mark DBTL ® | 0,2 |
| B-Komponente | Vestanat IPDI ® | 4,7 |

Die Dicke der Haftklebstoffschicht wird auf a) 0,06 mm und auf b) 0,1 mm eingestellt. Die Klebkraft der Haftklebstoffschicht beträgt a) 1,3 N/cm und b) 1,7 N/cm.
Die Rolling Ball Tack-Werte sind a) 17 mm und b) 9 mm.
Der pH-Wert beträgt jeweils 9,5 bis 10.
Der Durchgangswiderstand in z-Richtung beträgt a) 7,3 Ωm und b) 44,1 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 20

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol 1004 ® | 3,8 |
| | Baycoll BT 5031 ® | 53,3 |
| | CONDUKT-O-FIL S-3000-S3M® | 20,0 |
| | Weissfeinkalk ® | 15,0 |
| | Aerosil R 202 ® | 3,0 |
| | Mark DBTL ® | 0,2 |
| B-Komponente | Vestanat IPDI ® | 4,7 |

Die Dicke der Haftklebstoffschicht wird auf a) 0,06 mm und auf b) 0,1 mm eingestellt. Die Klebkraft der Haftklebstoffschicht beträgt a) 0,8 N/cm und b) 0,9 N/cm.
Die Rolling Ball Tack-Werte sind a) 33 mm und b) 47 mm.
Der pH-Wert beträgt jeweils 9,5 bis 10.
Der Durchgangswiderstand in z-Richtung beträgt a) 17 Ωm und b) 133 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 21

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol 1004® | 3,8 |
| | Baycoll BT 5031 ® | 53,3 |
| | STANDART Aluminiumpulver Lack NOT® | 20,0 |
| | Weissfeinkalk ® | 15,0 |
| | Aerosil R 202 ® | 3,0 |
| | Mark DBTL ® | 0,2 |
| B-Komponente | Vestanat IPDI ® | 4,7 |

Die Dicke der Haftklebstoffschicht wird auf a) 0,06 mm und auf b) 0,1 mm eingestellt. Die Klebkraft der Haftklebstoffschicht beträgt a) 0,6 N/cm und b) 0,8 N/cm.
Die Rolling Ball Tack-Werte sind a) 64 mm und b) 68 mm.
Der pH-Wert beträgt jeweils 9,0 bis 9,5.
Der Durchgangswiderstand in z-Richtung beträgt a) 23 Ωm und b) 130 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 22

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol P 1000 N ® | 34,5 |
| | Arcol 1067 S ® | 15,4 |
| | ECKA-Kupfer CH-S 24 ® | 20,0 |
| | Weissfeinkalk ® | 15,0 |
| | Aerosil R 202 ® | 3,0 |
| | Mark DBTL ® | 0,2 |
| B-Komponente | Vestanat IPDI ® | 11,9 |

Die Dicke der Haftklebstoffschicht wird auf a) 0,06 mm und auf b) 0,1 mm eingestellt. Die Klebkraft der Haftklebstoffschicht beträgt a) 2,4 N/cm und b) 2,7 N/cm.
Die Rolling Ball Tack-Werte sind a) 12 mm und b) 9 mm.
Der pH-Wert beträgt jeweils 9,0 bis 9,5.
Der Durchgangswiderstand in z-Richtung beträgt a) 0,8 Ωm und b) 1,8 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 23

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol P 1000 N ® | 34,5 |
| | Arcol 1067 S ® | 15,4 |
| | ECKA-Kupfer CH-S 24 ® | 20,0 |
| | Natriumcarbonat-Pulver | 15,0 |
| | Aerosil R 202 ® | 3,0 |
| | Mark DBTL ® | 0,2 |
| B-Komponente | Vestanat IPDI ® | 11,9 |

Die Dicke der Haftklebstoffschicht wird auf a) 0,06 mm und auf b) 0,1 mm eingestellt. Die Klebkraft der Haftklebstoffschicht beträgt a) 1,9 N/cm und b) 2,3 N/cm.
Die Rolling Ball Tack-Werte sind a) 12 mm und b) 9 mm.
Der pH-Wert beträgt jeweils 8,5 bis 9,0.
Der Durchgangswiderstand in z-Richtung beträgt a) 0,9 Ωm und b) 1,8 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 24

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol P 1000 N ® | 34,5 |
| | Arcol 1067 S ® | 15,4 |
| | ECKA-Kupfer CH-S 24 ® | 20,0 |
| | Kaliumcarbonat-Pulver | 15,0 |
| | Aerosil R 202 ® | 3,0 |
| | Mark DBTL ® | 0,2 |
| B-Komponente | Vestanat IPDI ® | 11,9 |

Die Dicke der Haftklebstoffschicht wird auf a) 0,06 mm und auf b) 0,1 mm eingestellt. Die Klebkraft der Haftklebstoffschicht beträgt a) 2,1 N/cm und b) 2,4 N/cm.
Die Rolling Ball Tack-Werte sind a) 14 mm und b) 12 mm.
Der pH-Wert beträgt jeweils 9,0 bis 9,5.
Der Durchgangswiderstand in z-Richtung beträgt a) 1,3 Ωm und b) 12,4 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Beispiel 25

Der Haftklebstoff des erfindungsgemäßen Polyurethan basierenden Klebebands setzt sich wie folgt zusammen:

| | Rohstoff | Gewichtsanteil [Gew.-%] |
|---|---|---|
| A-Komponente | Arcol P 1000 N ® | 34,5 |
| | Arcol 1067 S ® | 15,4 |
| | ECKA-Kupfer CH-S 24 ® | 20,0 |
| | Natriumcarbonat- / Kaliumcarbonat-Pulver (1:1) | 15,0 |
| | Aerosil R 202 ® | 3,0 |
| | Mark DBTL ® | 0,2 |
| B-Komponente | Vestanat IPDI ® | 11,9 |

Die Dicke der Haftklebstoffschicht wird auf a) 0,06 mm und auf b) 0,1 mm eingestellt. Die Klebkraft der Haftklebstoffschicht beträgt a) 2,0 N/cm und b) 2,3 N/cm.
Die Rolling Ball Tack-Werte sind a) 12 mm und b) 11 mm.
Der pH-Wert beträgt jeweils 9,0 bis 9,5.
Der Durchgangswiderstand in z-Richtung beträgt a) 0,8 Ωm und b) 14,6 Ωm.

Nach einem Jahr Lagerzeit sind die Werte unverändert.

Nach dem mehrfachen Aufbringen von Straßenerde auf die Haftklebstoffschicht und anschließendem Abspülen unter Leitungswasser sind die Werte ebenfalls unverändert.

### Vergleichsbeispiele

### Vergleichsbeispiel 1

Analog Beispiel 13 wird statt 15 Gew.-% Weißfeinkalk® 15 Gew.-% Natriumcarbonat-Granulat eingesetzt.
Es wird ein stark körniges, inhomogenes Klebeband erhalten, dessen Oberfläche deutlich abgegrenzte alkalische und nicht alkalische Bereiche entsprechend der Partikelverteilung des Natriumcarbonats besitzt. Die Homogenität der Alkalität ist nicht gegeben.

### Vergleichsbeispiel 2

Analog Beispiel 15 wird die Dicke der Haftklebstoffschicht auf 0,5 mm eingestellt. Das Klebeband ist nicht elektrisch leitfähig. Der Durchgangswiderstand in z-Richtung beträgt 1,3 x 10⁸ Ωm.

### Vergleichsbeispiel 3

Analog Beispiel 23 wird statt 15 Gew.-% Natriumcarbonat-Pulver wird 15 Gew.-% Natriumcarbonat-Granulat eingesetzt.
Es wird ein stark körniges, inhomogenes Klebeband erhalten, dessen Oberfläche deutlich abgegrenzte alkalische und nicht alkalische Bereiche entsprechend der Partikelverteilung des Natriumcarbonats besitzt. Die Homogenität der Alkalität ist nicht gegeben.

### Vergleichsbeispiel 4

Analog Beispiel 19 wird die Dicke der Haftklebstoffschicht wird auf 0,5 mm eingestellt. Das Klebeband ist nicht elektrisch leitfähig. Der Durchgangswiderstand in z-Richtung beträgt 1,3 × 10⁸ Ωm.

## Patentansprüche

1. Permanent vollflächig haftklebriges, vorzugsweise trägerloses Klebeband bestehend aus einer vorzugsweise auf ein antiadhäsives Medium beschichteten Schicht eines Haftklebstoffs, wobei dieser Haftklebstoff enthält
• einen alkalisch reagierenden, festen, pulverisierten, mineralischen Füllstoff mit einem Gewichtsanteil zwischen größer 0 Gew.-% und 60 Gew.-%, bezogen auf das Gesamtgewicht des Haftklebstoffs, so daß die permanent haftklebrige Oberfläche des Klebebands einen pH-Wert von größer 8 aufweist, und
• einen leitfähigen Zusatz, insbesondere ein Metallpulver, ein mit einem Metall beschichtetes Pulver und/oder metallisierte Kügelchen, mit einem Gewichtsanteil zwischen größer 0 Gew.-% und 60 Gew.-%, so daß das Klebeband in z-Richtung, das heißt in Richtung der Dicke des Klebebands, elektrisch leitfähig ist.

2. Klebeband nach Anspruch 1, **dadurch gekennzeichnet, daß** der Teilchendurchmesser des mineralischen Füllstoffs bezogen auf mindestens 80 % dieser Teilchen maximal 0,5 mm beträgt, bevorzugt maximal 0,1 mm.

3. Klebeband nach den Ansprüchen 1 oder 2, **dadurch gekennzeichnet, daß** der Teilchendurchmesser des leitfähigen Zusatzes bezogen auf mindestens 80 % dieser Teilchen mindestens 30 % der Dicke der Haftklebstoffschicht beträgt, bevorzugt mindestens 70 % der Dicke der Haftklebstoffschicht.

4. Klebeband nach einem der Ansprüche 1 bis 3, **dadurch gekennzeichnet, daß** der Gewichtsanteil des mineralischen Füllstoffs 5 Gew.-% bis 40 Gew.-%, bevorzugt 5 Gew.-% bis 30 Gew.-%, ganz besonders bevorzugt 5 Gew.-% bis 20 Gew.-%, bezogen auf das Gesamtgewicht des Haftklebstoffs beträgt.

5. Klebeband nach zumindest einem der vorherigen Ansprüche, **dadurch gekennzeichnet, daß** der Gewichtsanteil des leitfähigen Zusatzes 10 Gew.-% bis 30 Gew.-% bezogen auf das Gesamtgewicht des Haftklebstoffs beträgt.

6. Klebeband nach zumindest einem der vorherigen Ansprüche, **dadurch gekennzeichnet, daß** die Klebkraft der Haftklebstoffschicht mindestens 0,1 N/cm beträgt, bevorzugt mindestens 0,01 N/cm, insbesondere bei der auf Polyurethan basierenden Haftklebstoffschicht.

7. Klebeband nach zumindest einem der vorherigen Ansprüche, **dadurch gekennzeichnet, daß** im Rolling Ball Tack-Test mindestens ein Wert von 100 mm oder weniger erzielt wird, bevorzugt mindestens ein Wert von 300 mm oder weniger, insbesondere bei der auf Polyurethan basierenden Haftklebstoffschicht.

8. Klebeband nach zumindest einem der vorherigen Ansprüche, **dadurch gekennzeichnet, daß** der ph-Wert der insbesondere angefeuchteten Haftklebstoffoberfläche mindestens 8,5 oder höher ist.

9. Klebeband nach zumindest einem der vorherigen Ansprüche, **dadurch gekennzeichnet, daß** der Durchgangswiderstand der Haftklebstoffschicht in z-Richtung maximal 500 Ωm beträgt, bevorzugt maximal 1000 Ωm, insbesondere bei der auf Polyurethan basierenden Haftklebstoffschicht.

10. Verwendung eines Klebebands nach zumindest einem der vorhergehenden Ansprüche zur Applikation auf Elektroden von Elektrofiltern.
